# EUROPEAN PATENT APPLICATION

(11) **EP 3 385 188 A1**
(43) Date of publication of application: **10.10.2018**
(21) Application number: 18165644.8
(22) Date of filing: 04.04.2018
(51) Int. Cl.: B65D 21/02, B29C 45/00

(54) **CONTAINER AND METHOD OF FABRICATION THEREOF**

(30) Priority: 05.04.2017 US 201762481872 P
(71) Applicant: IPL INC., St-Damien Bellechasse, Québec G0R 2Y0 (CA)
(72) Inventor: Del Rosario Roy, Daisy, Pintendre, Québec G6C OB3 (CA); Mercier, Stéphane, St-Damien, Québec G0R 2Y0 (CA)
(74) Representative: P&TS SA (AG, Ltd.)

(57) **Abstract**

A method for fabricating a lid (10) or a base of a container (C), the lid (10) or base comprising a web (12) and an outer boundary, the method comprising injecting a plastic material through at least a first number of first cavities having a first thickness and through at least a second number of second cavities having a second thickness, the first cavities leading to the outer boundary of the lid (10) or base, the first thickness being larger than the second thickness; and selectively cooling the first cavities and the second cavities.

## Description

### FIELD OF THE INVENTION

The present disclosure relates to containers. More specifically, the present disclosure is concerned with a container and a method of fabrication thereof.

### SUMMARY OF THE INVENTION

More specifically, in accordance with the present disclosure, there is provided method for fabricating an end wall of a container, the end wall comprising a web and an outer boundary, the method comprising injecting a plastic material through at least a first number of first cavities having a first thickness and through at least a second number of second cavities having a second thickness, the first cavities leading to the outer boundary of the end wall, the first thickness being larger than the second thickness; and selectively cooling the first cavities and the second cavities.

There is provided an end wall of a container, the end wall comprising first parts of a first thickness and second parts of a second thickness, the first thickness being larger than the second thickness, the first parts being connected to an outer circumferential boundary of the end wall.

There is provided a combination of a container and a lid therefor, the container comprising a lateral wall extending up from a bottom wall to an upper rim, wherein at least one of: i) the bottom wall and ii) the lid comprises first parts of a first thickness and second parts of a second thickness, the first thickness being larger than the second thickness, the first parts being connected to an outer circumferential boundary of the at least one of: i) the bottom wall and ii) the lid.

There is provided a stackable container, comprising a lid, wherein the lid comprises first parts of a first thickness and second parts of a second thickness, the first thickness being larger than the second thickness, the first parts being connected to an outer circumferential boundary of the lid.

Other objects, advantages and features of the present disclosure will become more apparent upon reading of the following non-restrictive description of specific embodiments thereof, given by way of example only with reference to the accompanying drawings.

### BRIEF DESCRIPTION OF THE DRAWINGS

In the appended drawings:
FIG. 1 is a perspective bottom view of a container according to an embodiment of an aspect of the present disclosure;
FIG. 2 is a perspective top view of the lid of the container of FIG.1;
FIG. 3 is a top view of a lid according to an embodiment of an aspect of the present disclosure;
FIG. 4A is a perspective top view of a lid according to an embodiment of an aspect of the present disclosure;
FIG. 4B is a perspective bottom view of a lid according to an embodiment of an aspect of the present disclosure;
FIG. 5 is a schematic view of a lid or a bottom wall of a base of a container according to an embodiment of an aspect of the present disclosure;
FIG. 6 is a plan view of a bottom wall of a base of a container according to an embodiment of an aspect of the present disclosure; and.
FIG. 7 shows stacked containers.

### DESCRIPTION OF EMBODIMENTS OF THE INVENTION

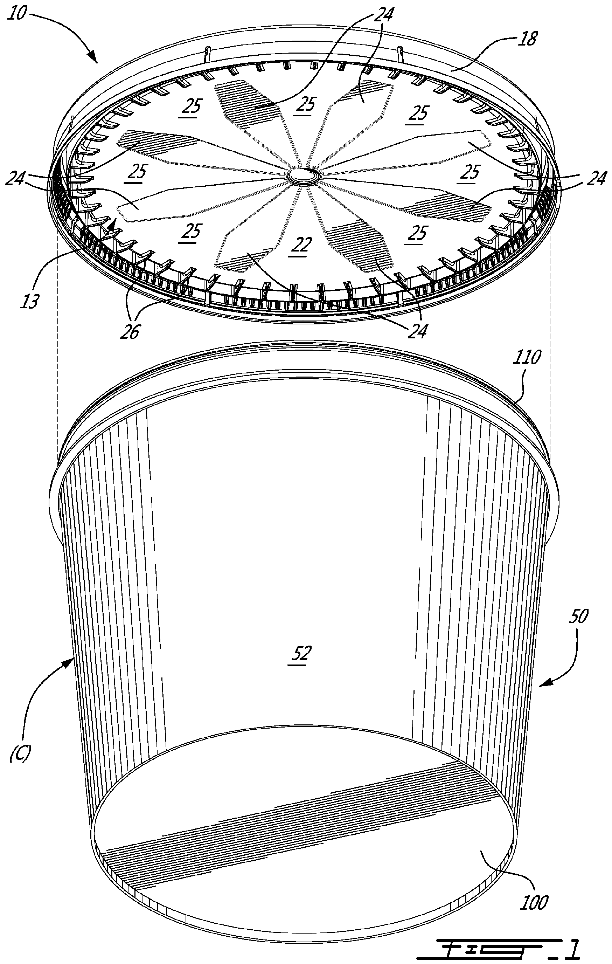

A container (C) as shown for example in FIG. 1, comprises a base 50 formed of lateral walls 52 extending up from a bottom wall 100 up to an upper rim 110. A lid 10 may be provided; in such cases, the container thus comprises a bottom wall and a top wall (i.e. the lid), referred herein as end walls.

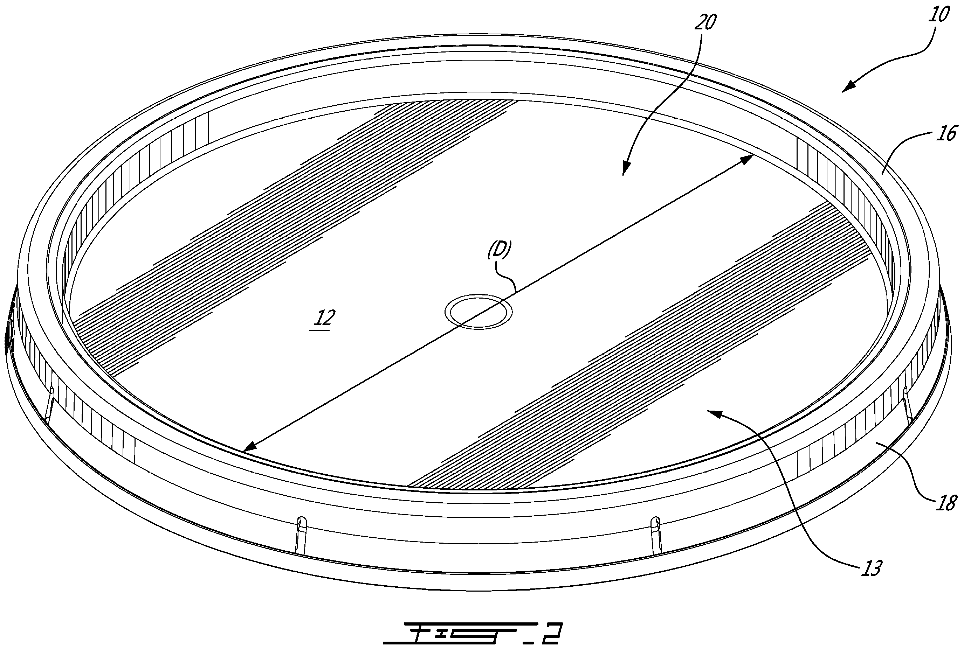

FIGs. 1 and 2 show one such end wall in the form of a lid 10 for the container (C) of FIG. 1, according to an embodiment of an aspect of the present disclosure.

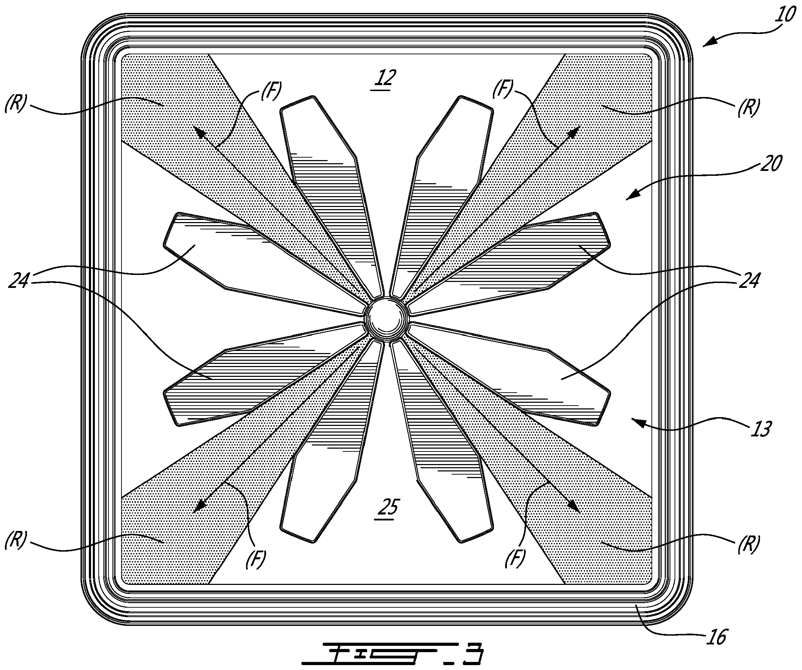

As best seen in FIGs. 1 and 3 for example, the lid 10 generally comprises a web 12 having an outer circumferential edge 13, and extending into an outer boundary formed by a circumferential flange 16 with a skirt 18 depending from the circumferential flange 16 and generally perpendicular to the web 12.

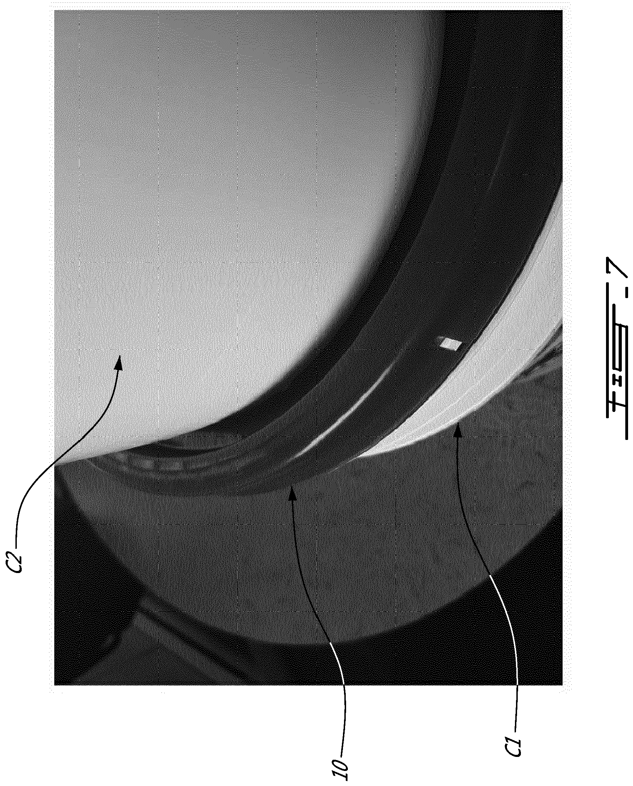

The circumferential edge 13 of the web 12, generally provides a support for a second container (C2) stacked on top of a first container (C1) (see for example FIG. 7). Strengthening ribs 26 may be provided, on the inner surface i.e. on the surface thereof facing the inside of the container, of the outer circumferential edge 13 of the web 12, as illustrated for example in FIG. 1, or alternatively on the outer surface i.e. on the surface of the lid facing the outside of the container, for circumferential reinforcement.

The flange 16 and the skirt 18 are configured to engage the upper rim 110 of the base 50 of the container (C) as shown in FIG. 1 for example.

The skirt 18 may comprises a tear strip defined by an upper score line and a connecting score line, the upper score line running along part of the circumference of the lid between the flange 16 and the depending skirt 18, for example.

The web 12 typically acts as an interface between the inside of the base 50 of the container (C) and the outside environment.

The web 12 comprises a top surface 20 (seen in FIG. 2 for example), i. e. a surface generally configured to face the outside of the container (C) when the lid 10 is in placed so as to cover the top opening of the base 50 of the container (C), and a bottom surface 22 (seen in FIG. 1 for example), i. e. a surface generally configured to face the inside of the base 50 of the container (C) when the lid 10 is positioned on top thereof.

The lid 10 may be made in a material such as polypropylene or polyethylene for example. The web 12 comprises regions 25 of a first thickness and regions 24 of a second thickness inferior to the first thickness.

The second thickness may be selected to be between about 5% and about 50%, for example between about 10% and about 20%, of the first thickness, depending on the size of the web (see for example diameter (D) of the web in FIG. 2). For example, the first thickness may be about 1. 7 mm (0.066 inch), and the second thickness may be about 1.4 mm (0.055 inch).

The regions 24 and 25 may form a pattern such as, in the example shown in FIG.1, a petal-like pattern.

The web 12 is thus divided between regions 24 of a reduced thickness compared to regions 25 of a larger thickness.

The regions 25 of a larger thickness are selectively positioned to cover at least the circumferential edge 13 of the web 12 to achieve a desired stiffness for stacking purposes as mentioned hereinabove in relation to FIG. 7 for example.

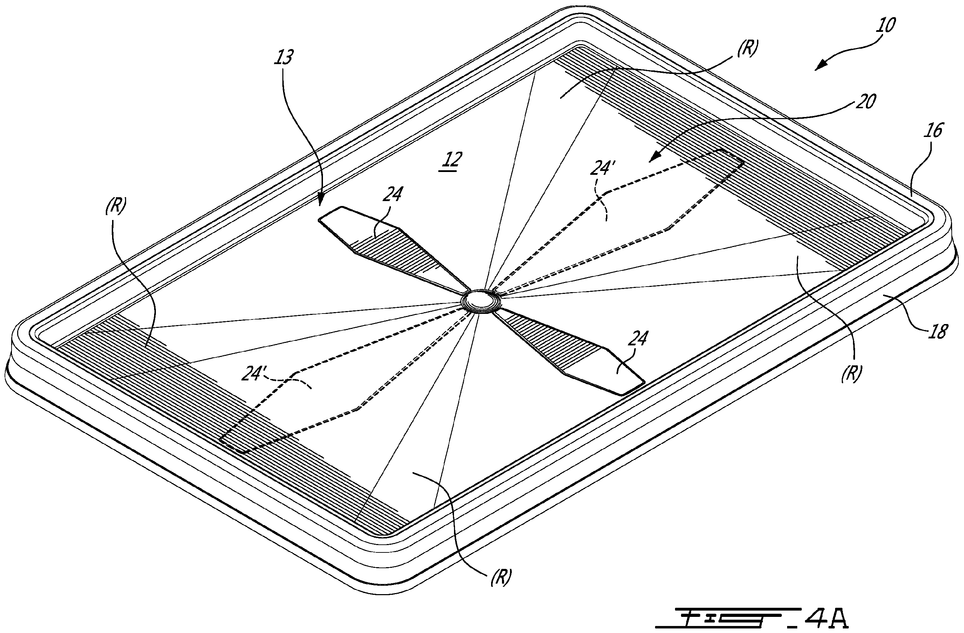

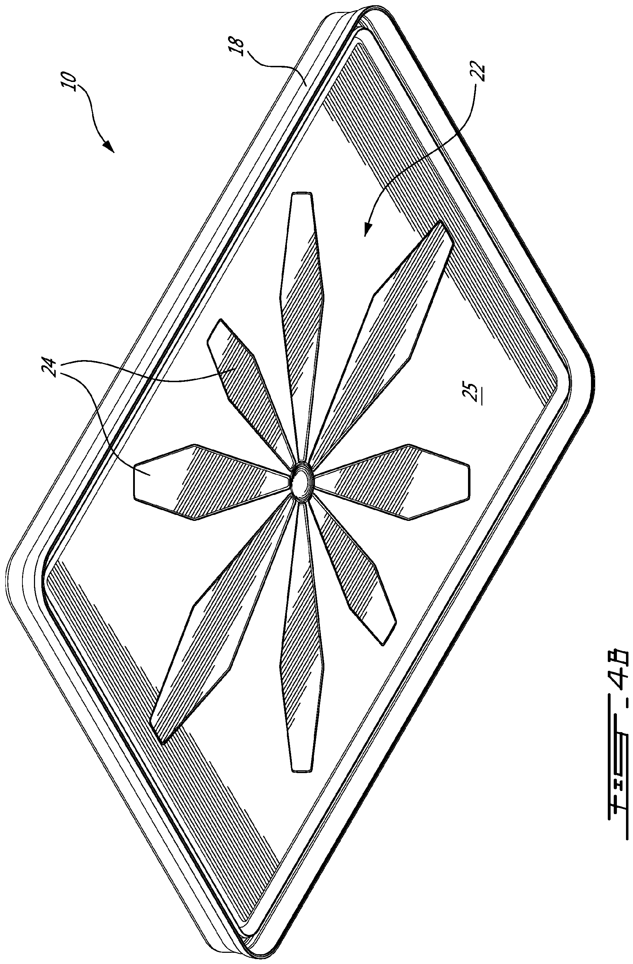

In the case of a square or a rectangle lid matching a square or a rectangle container, the regions 25 of larger thickness are selectively positioned so to be positioned at least along diagonal directions, i.e. in regions (R) generally extending from the center of the web to the corners of the lid, as shown for example in FIGs. 3 and 4.

The regions 24 of a reduced thickness may represent up to about 80% of the overall surface area of the web 12, for example between about 20% and 60% of the surface area of the web 12.

It has been found that such a configuration, while allowing a reduction of material needed to fabricate the lid 10 and hence a reduction in the weight of the lid 10, and thus of the container, provides mechanical resistance to the lid 10, and to the container once the lid 10 is on pace on top thereof, for stacking purposes for example.

In FIG. 3, the regions 24 of reduced thickness are shown positioned on the top surface 20 of the lid 10, i. e. on the surface generally configured to face the outside of the container the lid is intended to be placed upon.

In FIG. 4A, regions of reduced thickness are shown positioned on the top surface of a lid (see regions 24 in straight lines), i. e. generally configured to face the outside of the container the lid 10 is intended to be placed upon, as well as on the bottom surface 22 (see other regions 24' in phantom lines), i. e. generally configured to face the inside of the container when the lid 10 is positioned on top thereof.

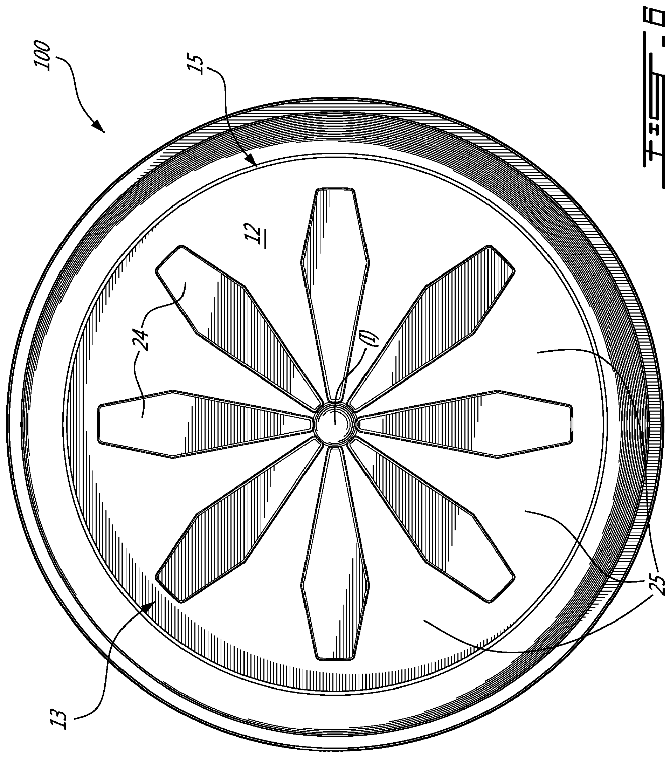

The outer boundary of the bottom wall 100 of the base 50 of a container typically comprises a circumferential foot 15 on the bottom surface thereof (see FIG. 6). The circumferential foot 15 is provided for contact with an underlying surface, as opposed to the web 12, which typically does not contact underlying surfaces under normal conditions or even under impacts or when the container is loaded.

In FIG. 4B regions 24 of reduced thickness are shown positioned on the bottom surface of a lid 10, i. e. on the surface of the web 12 generally configured to face the inside of the container when the lid is positioned on top thereof.

The surface of the web 12 with regions 24 or 24' of reduced thickness, namely on the top surface 20 or on the bottom surface 22 of the lid 10 respectively as illustrated for example in FIG. 4A, has a hollow relief with respect to other regions 25.

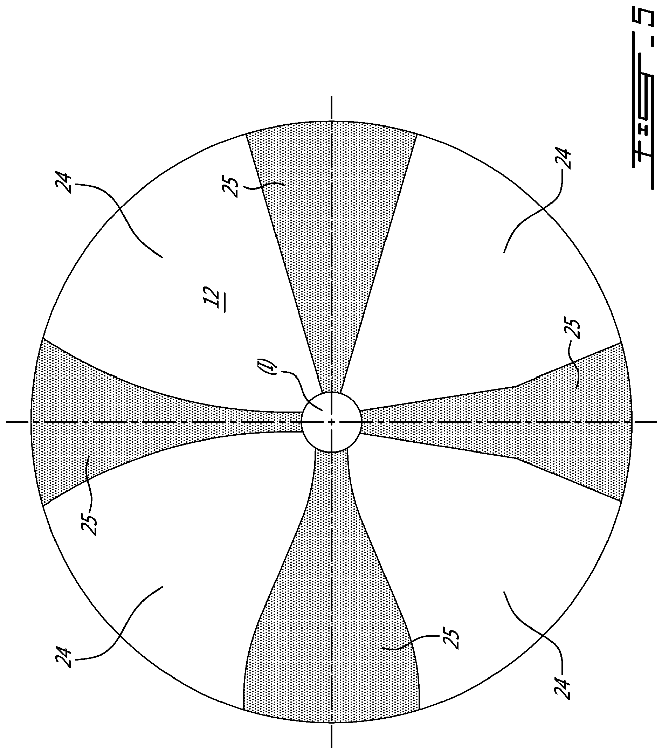

Although petal-like patterns of regions 24 of reduced thickness are illustrated, other patterns may be used, as shown in FIG. 5 from a central injection point (I) for example. The respective positions of the regions 24 and 25 on the web 122 may further be selected so that they are symmetrically positioned relative to the surface area of the web.

An example of another one of end walls of a container is shown for example in FIG. 6, illustrating the bottom wall 100 of the base 50 of a container comprising regions of reduced thickness 24 on an inner surface thereof, i. e. on the surface of the bottom wall generally configured to face the inside of the container and /or on an outer surface thereof, on the surface of the bottom wall 100, i. e. generally configured to face the outside of the container for example.

The regions 24 of reduced thickness may be provided of an inner surface of the lid 10 and/or of the bottom wall 100 of the base 50 of the container, and/or on an outer surface of the lid 10 and/or of the bottom wall 100 of the base 50 of the container. In practical applications, containers with smooth outer surfaces may be preferred, i.e. with bottom walls 100 and/or lids 10 having regions of reduced thickness 24 as described hereinabove on inner surfaces thereof, i. e. on the surface of the bottom walls/lids generally configured to face the inside of the containers. In contrast, in other applications, smooth inner surfaces of the lid 10 and/or of the bottom wall 100 of the base 50 of the container may be preferred, i.e. devoid of regions 24 of reduced thickness, as an uneven surface may mark the content of the container, such as food for example, due to the relief created by regions 24 and 25 of different thicknesses.

Typically, the end wall, i.e. the lid 10 or the bottom wall 100, is injected molded, in a material such as polypropylene for example, for its stiffness and ability to sustain repeated flexions without breaking, or in polyethylene for example.

From a central injection point (see for example (I) in FIG. 5), in an injection mold, the injected material is made to reach the outer boundary of the end wall (lid 10 or bottom wall 100), i.e. to form a flange 16 and a skirt 18 of a lid 10 for example or a foot 15 of a bottom wall 100 for example and/or corners in case of a parallelogram web (see arrows (F) in FIG. 3 for example), through regions 25 of a first thickness, while the remaining of the web is formed with regions 24 of a second thickness, the second thickness being smaller than the first thickness, so that all points of the outer circumferential boundary of the end wall are reached simultaneously. The parts of the mold for the regions 25 of the first thickness and the parts of the mold for the regions 24 of the second thickness are selectively cooled, using selectively positioned cooling water circuits for example, so as to achieve a uniform temperature of the injection material, in both the regions 25 of the first thickness and the regions 24 of the second thickness, at the end of the injection.

The different thicknesses, including the first thickness and the second thickness, are selected depending on the nature of the injection material, the size of the lid/bottom wall, the thickness of the walls of the container.

The present disclosure described regions of a first thickness and regions of a second thickness 25, 24. Regions of a third thickness may be provided in corners of a square or rectangle container/lid with the third thickness different from the first thickness and the second thickness (show for example regions (R) in FIG. 3) as mentioned hereinabove.

The scope of the claims should not be limited by the embodiments set forth in the examples, but should be given the broadest interpretation consistent with the description as a whole.

## Claims

1. A method for fabricating an end wall (10, 100) of a container (C), the end wall (10, 100) comprising a web (12) and an outer boundary, the method comprising injecting a plastic material through at least a first number of first cavities having a first thickness and through at least a second number of second cavities having a second thickness, the first cavities leading to the outer boundary of the end wall (10, 100), the first thickness being larger than the second thickness; and selectively cooling the first cavities and the second cavities.

2. The method of claim 1, wherein the first cavities lead to corners of the end wall (10, 100).

3. The method of claim 1, comprising selecting the first and the second thickness depending on at least one of: the plastic material, the size of the web (12), and a thickness of lateral walls of the container (C).

4. An end wall (10, 100) of a container (C), the end wall (10, 100) comprising first parts (25) of a first thickness and second parts (24) of a second thickness, said first thickness being larger than said second thickness, said first parts (25) being connected to an outer circumferential boundary of the end wall (10, 100).

5. The end wall (10, 100) of claim 4, wherein said first parts (25) are connected to corners of the end wall (10, 100).

6. The end wall (10, 100) of claim 4 or 5, comprising a web (12) extending into the outer circumferential edge of the end wall (10,100).

7. The end wall (10, 100) of any of claims 4 to 6, wherein said outer circumferential edge comprises a circumferential flange (16).

8. The end wall (10, 100) of any of claims 4 to 7, comprising a web (12) extending into the outer circumferential boundary of the end wall (10, 100), said outer circumferential boundary comprising a skirt (18) generally perpendicular to the web (12).

9. The end wall (10, 100) of any of claims 4 to 8, wherein said end wall (10, 100) is a lid (10).

10. A combination of a container (C) and a lid (10) therefor, the container (C) comprising a lateral wall extending up from a bottom wall (100) to an upper rim, wherein at least one of: i) said bottom wall (100) and ii) said lid (10) comprises first parts (25) of a first thickness and second parts (24) of a second thickness, said first thickness being larger than said second thickness, said first parts (25) being connected to an outer circumferential boundary of the at least one of: i) said bottom wall (100) and ii) said lid (10).

11. The combination of claim 10, said container (C) being one of a square or rectangle container (C), at least one of: i) said bottom wall (100) and ii) said lid (10) comprising corners, wherein said first parts (25) are connected to said corners.

12. A stackable container (C), comprising a lid (10), wherein said lid (10) comprises first parts (25) of a first thickness and second parts (24) of a second thickness, said first thickness being larger than said second thickness, said first parts (25) being connected to an outer circumferential boundary of the lid (10).

13. A wall for a container (C), said wall comprising a web (12) of a first thickness, said web (12) comprising a pattern formed of regions (24) of a second thickness, said second thickness being between about 10% and 20% smaller than the first thickness.

14. The wall for a container (C) of claim 13, wherein said web (12) has a first surface configured to face the inside of the container (C) and a second opposite surface configured to face the outside of the container (C), wherein the pattern is formed on at least one of said first and second surfaces.

15. The wall for a container (C) of claim 13 or 14, wherein said wall comprises an outer circumferential edge (13), said outer circumferential edge (13) having the first thickness.
